# EUROPEAN PATENT APPLICATION

(11) **EP 4 589 762 A1**
(43) Date of publication of application: **23.07.2025**
(21) Application number: 24828716.1
(22) Date of filing: 25.07.2024
(51) Int. Cl.: H01M 50/593

(54) **INSULATING ASSEMBLY AND POWER BATTERY**

(30) Priority: 05.12.2023 CN 202323323081 U
(71) Applicant: Eve Power Co., Ltd., Jingmen, Hubei 448000 (CN)
(72) Inventor: SHAO, Zhendong, Hubei 448000 (CN); CHEN, Xianyang, Hubei 448000 (CN)
(74) Representative: Berggren Oy
(86) International application number: PCT/CN2024/107571
(87) International publication number: WO 2025/118632

(57) **Abstract**

The present application relates to an insulation assembly and a power battery. The insulation assembly includes: an insulation member having a first accommodating cavity and a first through hole in communication with the first accommodating cavity, the first accommodating cavity is configured to accommodate a core package; a bottom support piece, arranged at a bottom of the insulation member and at a side away from the first accommodating cavity, the bottom support piece has a second through hole; and a blocking member, arranged on an outer wall of the insulation member, the blocking member is covered on the first through hole and the second through hole to block the first through hole and the second through hole.

## Description

This application claims priority to and the benefit of Chinese Patent Application No. 202323323081.2, filed with Chinese Patent Office on December 5, 2023, the disclosure of which is incorporated herein by reference in its entirety.

### TECHNICAL FIELD

The present application relates to the technical field of power battery, and in particular to an insulation assembly and a power battery.

### BACKGROUND

At present, a battery is widely used in the field of new energy, such as new energy vehicles, power storage stations, etc. New energy vehicles have become a new development trend in the automotive industry, and the safety and service life of the battery in new energy vehicles are very important to a consumer. Therefore, how to improve the safety and cycle life of the battery is an important research direction in the field of battery technology. Among various safety performance indicators, an insulation performance is an important indicator. When the electrode assembly is in direct contact with the aluminum housing, it will result in a short circuit in the battery, causing thermal runaway, fire, and explosion of the battery; therefore, in the battery, the protection of the electrode assembly is particularly critical.

### SUMMARY

However, during use, the core package may collide with other structures and suffer from a powder falling phenomenon, which may easily lead to the risk of short circuit between the core package and the housing, thereby reducing the stability of the core package during operation.

Therefore, it is urgent to design an insulation assembly and a power battery to solve the technical risks.

In a first aspect, the present application provides an insulation assembly, comprising: an insulating member, having a first accommodating cavity and a first through hole in communication with the first accommodating cavity, the first accommodating cavity is configured to accommodate a core package; a bottom support piece, arranged at the bottom of the insulation member and at a side away from the first accommodating cavity, the bottom support piece having a second through hole; a blocking member arranged on an outer wall of the insulation member, the blocking member is covered on the first through hole and/or the second through hole to block the first through hole and the second through hole.

In a second aspect, the present application also provides a power battery, comprising: the above-mentioned insulation assembly; a core pack disposed in the first accommodating cavity of the insulation assembly; and a housing having a second accommodating cavity, the insulation assembly is disposed in the second accommodating cavity.

### Beneficial Effect

The insulation assembly provided in the present application has a blocking member arranged on the outer wall of the insulation member. With such arrangement, when the core package in the insulation member suffers from the powder falling phenomenon, the powder cannot leak from the insulation member to the outside, thereby preventing the core package from contacting with the housing to cause a short circuit, which can further ensure the safety and stability of the core package during operation, so as to meet the usage needs of a user.

The power battery provided in the present application can ensure the stability of the power battery during operation by arranging the insulation assembly in the second receiving cavity of the power battery.

### DESCRIPTION OF DRAWINGS

FIG.1 is a schematic perspective view of an insulation assembly provided in a first embodiment;
FIG.2 is a schematic perspective view of an insulation assembly provided in a second embodiment;
FIG.3 is a schematic bottom view of the insulation assembly provided in the first embodiment;
FIG.4 is a structure schematic diagram of the bottom support piece provided in an embodiment;
FIG.5 is a schematic side view of an insulation assembly provided in a second embodiment;
FIG.6 is an expanded schematic view of the insulation member provided in the first embodiment;
FIG.7 is an expanded schematic view of the insulation member provided in the second embodiment.

### Description of reference symbols:

10. Insulation member; 11. First accommodating cavity; 12. First through hole;
20. Bottom support piece; 21. Second through hole;
30. Blocking member;
X. First Direction

### DETAILED DESCRIPTION OF EMBODIMENTS

The following will clearly and completely describe the technical solutions in the embodiments of the present application in conjugation with the drawings in the embodiments of the present application. Obviously, the described embodiments are only part of the embodiments of the present application, not all of the embodiments. Based on the embodiments in the present application, all other embodiments obtained by those skilled in the art without creative work fall within the protection scope of the present application.

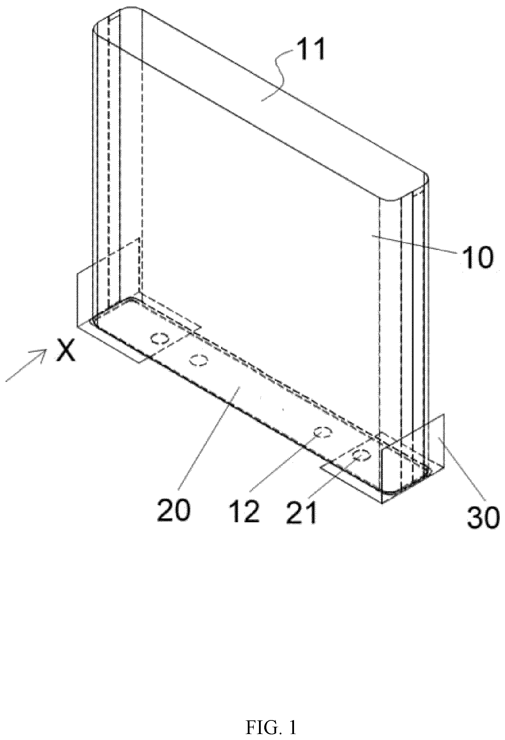

As shown in FIGS. 1 to 3, in the first aspect, an embodiment of the present application provides an insulation assembly, which includes an insulation member 10, a bottom support piece 20 and a blocking member 30. The insulation member 10 has a first accommodating cavity 11 and a first through hole 12 connected to the first accommodating cavity 11, the first accommodating cavity 11 is configured to accommodate the core package, the bottom support piece 20 is arranged at the bottom of the insulation member 10 and at the side away from the first accommodating cavity 11, the bottom support piece 20 has a second through hole 21, and the blocking member 30 is arranged on the outer wall of the insulation member 10, and the blocking member 30 is covered on the first through hole 12 and/or the second through hole 21 to block the first through hole 12 and the second through hole 21.

By applying the technical solution of the present application, a blocking member 30 is provided on the outer wall of the insulation member 10. With this arrangement, when the powder falling phenomenon occurs in the core package in the insulation member 10, the powder cannot leak from the insulation member 10 to the outside, thereby preventing the core package from contacting the housing to cause a short circuit, which can further ensure the safety and stability of the core package during operation to meet the usage needs of the user.

As shown in FIG. 1, the first through hole 12 is located at the bottom of the insulation member 10, and the axis lines of the first through hole 12 and the second through hole 21 do not overlap. This arrangement can prevent the powder from falling directly into the housing from the first through hole 12 and the second through hole 21 after the powder falls off the core package, thereby further reducing the risk of short circuit between the core package and the housing, which is conducive to maintaining the stability of the device during operation so as to meet the usage needs of the user.

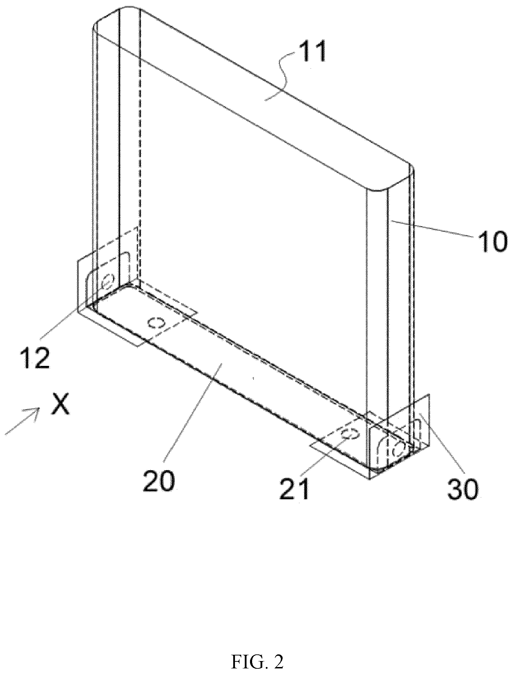

As shown in FIG.2, the first through hole 12 is located on the side wall of the insulation member 10. This arrangement can further prevent the powder from leaking through the second through hole 21 after the powder falls off the core package, thereby preventing the core package from short-circuiting, which can thus improve the safety of the device during operation. Optionally, the first through hole 12 may also be arranged in other places, as long as the axis lines of the first through hole 12 and the second through hole 21 can be avoided from overlapping, which can thus improve the applicability of the device to meet the use requirements in different scenarios.

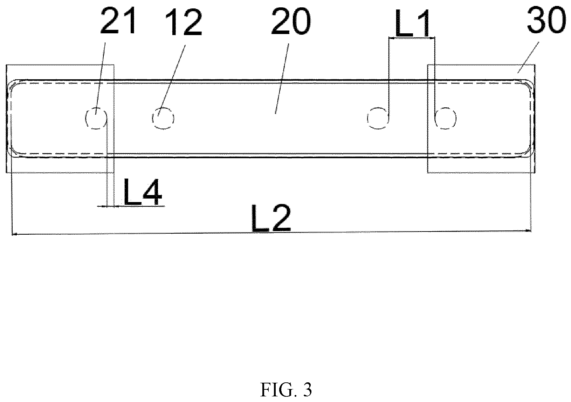

As shown in FIG.3, the shortest distance between the first through hole 12 and the second through hole 21 is L1, the length of the bottom support piece 20 is L2, and 15mm≤L1≤1/2L2. When L1 < 15mm, the distance between the first through hole 12 and the second through hole 21 is too short, which is not convenient for the processing of the structure, raises the processing difficulty of the structure, and easily increases the production cost of the device; when L1 > 1/2L2, the spacing distance between the first through hole 12 and the second through hole 21 is too large, which is not only not convenient for the blocking member 30 to block the two through holes, but also not convenient for the device to be positioned during installation, thus reducing the assembly efficiency of the device. Therefore, setting 15mm≤L1≤1/2L2 can reduce the processing cost of the device while facilitating the assembly of the device. Optionally, L1 may be set to other values such as 15mm, 18mm or 20mm, as long as it may meet the use requirements of the device.

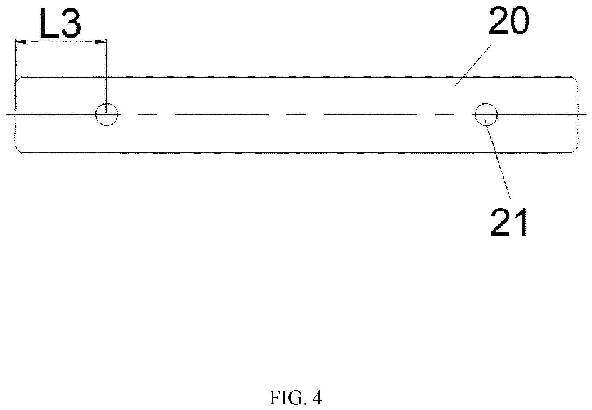

As shown in FIG.4, the shortest distance between the center of the second through hole 21 and the edge of the bottom support piece 20 extending along the first direction is L3, and 10mm≤L3≤40mm. When L3 < 10mm, the spacing distance between the second through hole 21 and the bottom support piece 20 is too short, which is not convenient for processing the second through hole 21 and will increase the processing difficulty of the second through hole 21; when L3 >40mm, the spacing distance between the second through hole 21 and the bottom support piece 20 is too large, which is thus not conducive for the blocking member 30 to block the second through hole, thereby increasing the length of the blocking member 30 and further increasing the production cost of the device. Therefore, setting 10mm≤L3≤40mm can not only reduce the processing difficulty of the second through hole 21, but also facilitate the blocking member 30 to block the second through hole. In the present application, L3 may be set to other values such as 10mm, 20mm or 40mm, as long as it can meet the use requirements of the device.

As shown in FIG.3, the shortest distance between the edge of the blocking member 30 and the edge of the second through hole 21 is L4, 3mm≤L4≤8mm. When L4<3mm, the distance between the edges of the second through hole 21 and the blocking member 30 is too short, which is not conducive for the blocking member 30 to block the second through hole, and reduces the blocking effect of the blocking member 30; when L4>8mm, the spacing distance between the edges of the second through hole 21 and the blocking member 30 is too large, which will increase the length of the blocking member 30, and further increase the production cost of the device. Therefore, setting 3mm≤L4≤8mm can not only reduce the processing difficulty of the second through hole 21, but also facilitate the blocking member 30 to block the second through hole. In the present application, L4 may be set to other values such as 3mm, 5mm or 8mm, as long as it can meet the use requirements of the device.

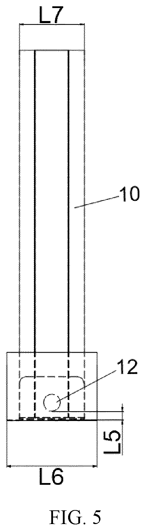

As shown in FIG.5, the shortest distance between the edge of the blocking member 30 and the edge of the first through hole 12 is L5, and 3mm≤L5≤8mm. When L5<3mm, the spacing distance between the edges of the first through hole 12 and the blocking member 30 is too short, which is not conducive for the blocking member 30 to block the first through hole, and reduces the blocking effect of the blocking member 30; when L5> 8mm, the distance between the edges of the first through hole 12 and the blocking member 30 is too large, which will thus increase the length of the blocking member 30, and further increase the production cost of the device. Therefore, setting 3mm≤L5≤8mm can not only reduce the processing difficulty of the first through hole 12, but also facilitate the blocking member 30 to block the first through hole. In the present application, L5 may be set to other values such as 3mm, 5mm or 8mm, as long as it can meet the use requirements of the device.

Specifically, the extension length of the blocking member 30 along the second direction is L6, the extension length of the insulation member 10 along the second direction is L7, and L6=1.2L7. This arrangement can increase the coverage range of the blocking member 30 on the insulation member 10, thereby improving the blocking effect of the blocking member 30. Of course, in other embodiments of the present application, L6 may also be other multiples of L7, as long as the blocking requirements of the blocking member 30 can be met.

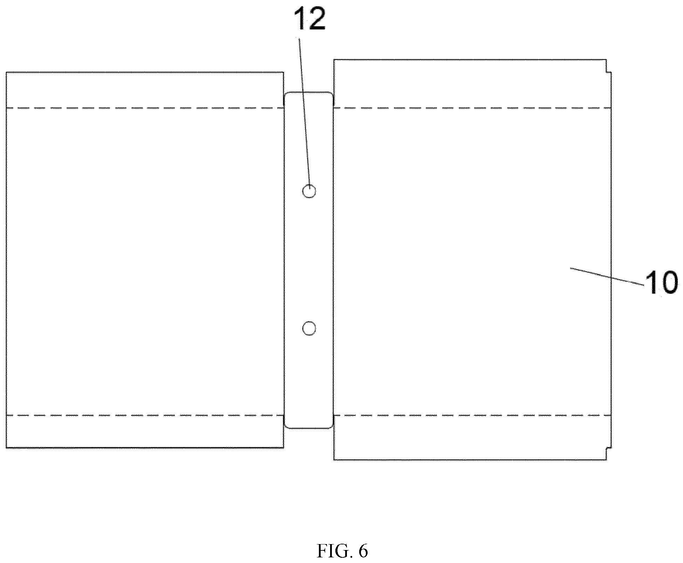

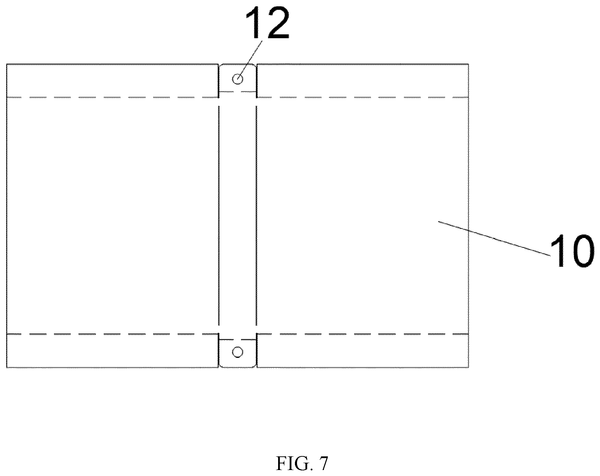

In one embodiment, the insulation member 10 is shaped by bending an insulating film in one piece. As shown in FIG.6 and FIG.7, the insulating film may be folded along the dotted lines in the figures to form the insulation member 10.

In the present application, the material of the insulation member 10 and the bottom support piece 20 is PP (polypropylene). Since polypropylene is a non-toxic, odorless, tasteless, milky white, highly crystalline polymer with a density of only 0.90-0.91 g/cm³ and it is one of the lightest varieties of all plastics, it is not only convenient for processing of the component, but also can reduce the overall weight of the device, thereby facilitating the lightweight development of the device.

In a second aspect, an embodiment of the present application provides a power battery, comprising: the above-mentioned insulation assembly; the core pack disposed in the first accommodating cavity 11 of the insulation assembly; and a housing having a second accommodating cavity, the insulation assembly is disposed within the second accommodating cavity.

By applying the technical solution of the present application, a blocking member 30 is disposed on the outer wall of the insulation member 10. With this arrangement, when the powder falling phenomenon occurs in the core package in the insulation member 10, the powder cannot leak from the insulation member 10 to the outside, thereby preventing the core package from contacting the housing to cause a short circuit, which can further ensure the safety and stability of the core package during operation to meet the usage needs of the user.

It should be noted that the terms used herein are only for describing specific embodiments and are not intended to limit the exemplary embodiments according to the present application. As used herein, unless it is clearly indicated otherwise under the context, the singular form is also intended to include the plural form. In addition, it should be understood that when the terms "comprise" and/or "include" are used in this specification, it indicates the presence of features, steps, operations, devices, components and/or combinations thereof.

Unless otherwise specifically stated, the relative arrangement, numerical expressions and numerical values of the parts and steps set forth in these embodiments do not limit the scope of the present application. Meanwhile, it should be understood that, for ease of description, the sizes of the various parts shown in the accompanying drawings are not drawn according to the actual proportional relationship. The technology, method and equipment known to those of ordinary skill in the relevant field may not be discussed in detail, but in appropriate cases, the technology, method and equipment should be considered as a part of the allowed specification. In all examples shown and discussed here, any specific value should be interpreted as being merely exemplary, rather than as a limitation. Therefore, other examples of exemplary embodiments may have different values. It should be noted that similar reference numerals and letters represent similar items in the following drawings, so that once a certain item is defined in an accompanying drawing, it does not need to be further discussed in subsequent drawings.

In the description of the present application, it should be understood that the directional or positional relationships indicated by directional words such as "front, back, up, down, left, right", "lateral, vertical, perpendicular, horizontal" and "top, bottom" are usually based on the directional or positional relationships shown in the drawings, and are only for the convenience of describing the present application and simplifying the description. Unless otherwise specified, these directional words do not indicate or imply that the referred device or element must have a specific direction or be constructed and operated in a specific direction, and therefore cannot be understood as limiting the protection scope of the present application; the directional words "inside and outside" refer to the inside and outside relative to the contour of each component itself.

For ease of description, the spatially relative terms such as "above", "top", "on the upper surface of", "over" etc. may be used here to describe the spatial positional relationship between a device or feature and other devices or features as shown in the figure. It should be understood that the spatially relative terms are intended to include different orientations of the device in use or operation in addition to the orientation described in the figure. For example, if the device in the accompanying drawings is inverted, the device described as "above other devices or structures" or "over other devices or structures" will be positioned as "below other devices or structures" or "under other devices or structures". Thus, the exemplary term "above" may include both "above" and "below". The device may also be positioned in other different ways (rotated 90 degrees or in other orientations), and the spatially relative descriptions used here are interpreted accordingly.

In addition, it should be noted that the use of the terms such as "first" and "second" to limit the components is only to facilitate the distinction between the corresponding components. Unless otherwise stated, the above terms have no special meaning and therefore cannot be understood as limiting the protection scope of the present application.

The above description is only the preferred embodiment of the present application and is not intended to limit the present application. For those skilled in the art, the present application may have various modifications and variations. Any modification, equivalent replacement, improvement etc. made within the spirit and principle of the present application shall be included in the protection scope of the present application.

## Claims

1. An insulation assembly, comprising:
an insulation member (10) having a first accommodating cavity (11) and a first through hole (12) in communication with the first accommodating cavity (11), wherein the first accommodating cavity (11) is configured to accommodate a core package;
a bottom support piece (20), arranged at a bottom of the insulation member (10) and at a side away from the first accommodating cavity (11), wherein the bottom support piece (20) has a second through hole (21);
a blocking member (30), arranged on an outer wall of the insulation member (10), wherein the blocking member (30) is covered on the first through hole (12) and/or the second through hole (21) to block the first through hole (12) and the second through hole (21).

2. The insulation assembly according to claim 1, wherein the first through hole (12) is located at the bottom of the insulation member (10), and axis lines of the first through hole (12) and the second through hole (21) do not overlap.

3. The insulation assembly according to claim 1, wherein the first through hole (12) is located on a side wall of the insulation member (10).

4. The insulation assembly according to claim 2, wherein a shortest distance between the first through hole (12) and the second through hole (21) is L1, a length of the bottom support piece (20) is L2, and 15 mm ≤ L1 ≤ 1/2 L2.

5. The insulation assembly according to any one of claims 1 to 4, wherein a shortest distance between a center of the second through hole (21) and an edge of the bottom support piece (20) extending along a first direction is L3, and 10 mm ≤ L3 ≤ 40 mm.

6. The insulation assembly according to claim 1, wherein a shortest distance between an edge of the blocking member (30) and an edge of the second through hole (21) is L4, and 3mm≤L4≤8mm.

7. The insulation assembly according to claim 3, wherein a shortest distance between an edge of the blocking member (30) and an edge of the first through hole (12) is L5, and 3mm≤L5≤8mm.

8. The insulation assembly according to claim 5, wherein an extension length of the blocking member (30) along the first direction is L6, and an extension length of the insulation member (10) along the first direction is L7, and L6=1.2L7.

9. The insulation assembly according to any one of claims 1 to 8, wherein the insulation member (10) is shaped by bending an insulating film in one piece.

10. The insulation assembly according to any one of claims 1 to 8, wherein a material of the insulation member (10) and the bottom support piece (20) comprises polypropylene.

11. A power battery, comprising:
the insulation assembly according to any one of claims 1 to 10;
a core package, arranged in the first accommodating cavity (11) of the insulation assembly;
a housing having a second accommodating cavity, wherein the insulation assembly is arranged in the second accommodating cavity.
